# EUROPÄISCHE PATENTSCHRIFT

(11) **EP 2 605 096 B1**
(45) Veröffentlichungstag und Bekanntmachung des Hinweises auf die Patenterteilung: **19.03.2014**
(21) Anmeldenummer: 11193445.1
(22) Anmeldetag: 14.12.2011
(51) Int. Cl.: G05B 19/042

(54) **Sicherheitsgerichtete Steuerung in Kombination mit Cloud-Computing**
Safety control in combination with cloud computing
Commande orientée vers la sécurité en combinaison avec le cloud-computing

(43) Veröffentlichungstag der Anmeldung: 19.06.2013
(73) Patentinhaber: Siemens Aktiengesellschaft, 80333 München (DE)
(72) Erfinder: Hamm, Carsten, 91058 Erlangen (DE); Kaever, Michael, 91056 Erlangen (DE)

(56) Entgegenhaltungen:
- EP-A1- 2 293 164
- EP-A2- 2 302 472
- EP-A2- 2 392 434
- DE-A1- 10 219 501

## Beschreibung

Die vorliegende Erfindung betrifft ein Betriebsverfahren für eine Steuereinrichtung für einen industriellen technischen Prozess.

Die vorliegende Erfindung betrifft weiterhin ein Steuerprogramm für eine Steuereinrichtung für einen industriellen technischen Prozess, wobei das Steuerprogramm Maschinencode umfasst, der von einer Prozessoreinrichtung der Steuereinrichtung unmittelbar abarbeitbar ist und dessen Abarbeitung durch die Prozessoreinrichtung bewirkt, dass die Steuereinrichtung ein derartiges Betriebsverfahren ausführt.

Die vorliegende Erfindung betrifft weiterhin eine Steuereinrichtung für einen industriellen technischen Prozess, wobei die Steuereinrichtung eine Prozessoreinrichtung umfasst, wobei die Steuereinrichtung mit einem derartigen Steuerprogramm programmiert ist, so dass sie im Betrieb aufgrund der Abarbeitung des Maschinencodes des Steuerprogramms durch die Prozessoreinrichtung ein derartiges Betriebsverfahren ausführt.

Betriebsverfahren für Steuereinrichtungen für einen industriellen technischen Prozess sind allgemein bekannt. Sie werden oftmals - aber nicht ausschließlich - von speicherprogrammierbaren Steuerungen ausgeführt. Eine speicherprogrammierbare Steuerung ist also eine typische Steuereinrichtung im Sinne der vorliegenden Erfindung.

Die Betriebsverfahren für die Steuereinrichtung laufen im Stand der Technik in der Regel wie folgt ab:
- Die Steuereinrichtung nimmt vom Prozess Eingangssignale entgegen.
- Die Steuereinrichtung ermittelt unter Verwendung der Eingangssignale (und ggf. weiterer, steuerungsinterner Zustände wie beispielsweise Timern und Merken) für den Prozess bestimmte Steuersignale.
- Die Steuereinrichtung steuert den Prozess entsprechend den ermittelten Steuersignalen.

Für viele Anwendungen ist diese Vorgehensweise ausreichend. Es existieren jedoch auch viele sicherheitsgerichtete Anwendungen. Bei sicherheitsgerichteten Anwendungen darf ein einzelner Fehler - unabhängig vom Fehlerort - nicht dazu führen, dass der industrielle technische Prozess in einen gefährlichen Zustand gerät. Der Fehler muss vielmehr erkannt werden. In Reaktion auf den Fehler muss der Prozess in einen sicheren Zustand überführt werden. Ein gefährlicher Zustand im Sinne der vorliegenden Erfindung ist ein Zustand, in dem die Gefahr eines Sach- oder sogar Personenschadens besteht. Ein sicherer Zustand im Sinne der vorliegenden Erfindung ist ein Zustand, in dem eine derartige Gefahr nicht besteht. Ein Beispiel eines gefährlichen Zustands ist beispielsweise, dass ein Notausschalter defekt wird. In einem derartigen Fall könnte beispielsweise mittels des Notausschalters kein Notaus mehr ausgelöst werden. Ein sicherer Zustand ist beispielsweise, wenn eine Anlage stromlos geschaltet wird.

Zur Realisierung eines derartigen fehlersicheren Verhaltens wird im Stand der Technik wie folgt vorgegangen:
- Die Steuereinrichtung nimmt vom Prozess sicherheitsgerichtete Eingangssignale in fehlersicherer Weise entgegen.
- Die Steuereinrichtung ermittelt in fehlersicherer Weise für den industriellen technischen Prozess bestimmte sicherheitsgerichtete Steuersignale.
- Sie entscheidet (beispielsweise aufgrund einer zweikanaligen Ausbildung der Steuereinrichtung), ob sie die ermittelten sicherheitsgerichteten Steuersignale als korrekt anerkennt.
- Je nach Ergebnis der Entscheidung steuert die Steuereinrichtung entweder den industriellen technischen Prozess entsprechend den sicherheitsgerichteten Steuersignalen in fehlersicherer Weise oder sie überführt den industriellen technischen Prozess in fehlersicherer Weise in einen sicheren Zustand.

In Verbindung mit "normalen", nicht sicherheitsgerichteten Steuerungsprozessen ist weiterhin bekannt, dass die Steuereinrichtung
- vom Prozess Eingangssignale entgegen nimmt,
- die Eingangssignale über eine Anbindung an ein Rechnernetz an einen Rechner übermittelt,
- über die Anbindung an das Rechnernetz von dem Rechner für den industriellen technischen Prozess bestimmte Steuersignale entgegen nimmt und
- den industriellen technischen Prozess entsprechend den entgegen genommenen Steuersignalen steuert.

Das Thema Cloud-Computing revolutioniert derzeit die Datenverarbeitung. Die für den Anwender spürbare Auswirkung besteht insbesondere in einer deutlichen Reduzierung der Antwortzeit bei rechenintensiven Aufgaben der Datenverarbeitung. Im Rahmen des Cloud-Computing werden zwar auch Fragestellungen wie Redundanz, Lastverteilungen usw. betrachtet und durch entsprechende Lösungen unterstützt. Der Fokus ist jedoch eher auf die Sicherstellung eines gewünschten Leistungsniveaus (durch Lastverteilung auf verschiedene Systeme) gerichtet. Weiterhin wird die Zuverlässigkeit im Sinne der Ausfallsicherheit bzw. Verfügbarkeit des jeweiligen Cloud-Services behandelt. Es handelt sich also um eine serverspezifische Standby-Funktionalität.

Es wäre wünschenswert, Cloud-Computing auch im Bereich sicherheitsgerichteter Steuerungsvorgänge einzusetzen. Hierfür müssten die fehlersicheren Eingangssignale über ein fehlersicheres Protokoll an mindestens zwei Rechner übermittelt werden, von den beiden Rechnern jeweils die von dem jeweiligen Rechner ermittelten Steuersignale und das Vergleichsergebnis mit den Steuersignalen des jeweils anderen Rechners bzw. eine entsprechende Freigabe entgegen genommen werden. Weiterhin müsste eine entsprechende Überprüfung der entgegen genommenen Steuersignale erfolgen. Dies ist jedoch nicht ohne Weiteres möglich. Denn im Rahmen von Cloud-Computing erfolgt - für den Anwender nicht erkennbar - eine virtuelle Abbildung der gewünschten Rechenanforderung auf einen Rechner eines Rechnerverbundes. Die Abbildung erfolgt für den Anwender verdeckt. Es kann daher nicht ohne Weiteres gewährleistet werden, dass die Ermittlung der Steuersignale auf physikalisch getrennten Rechnern erfolgt. Vielmehr kann die Situation auftreten, dass die Ermittlung der Steuersignale auf zwei logischen Rechnern erfolgt, die physikalisch durch denselben Rechner realisiert werden. In derartigen Fällen wäre ein Fehler in dem einen physikalischen Rechner, der beide logische Rechner realisiert, nicht mehr erkennbar, so dass unbemerkt ein gefährlicher Zustand eintreten kann.

Das Dokument EP 2 392 434 A2 betrifft ein Verfahren und eine Steuerung zum Steuern von Roboterzellen, wobei die Steuerung Sicherheitsinformationen über eine Netzwerk-Datenverbindung empfängt.

Die technische Lösung lehrt unter anderem eine verteilte Sicherheitsarchitektur, bei der eine Kommunikation von sicherheitsrelevanten Signalen von Sicherheitseinrichtungen sowie übergeordneten Steuergeräten stattfindet. Die Sicherheitslogik, die auch die entsprechende Ausgabe erzeugt und ansteuert, ist vollständig lokal in der jeweiligen Robotersteuerung implementiert.

Das Dokument EP 2 293 164 A1 offenbart eine Anwendung einer Cloud-Computing-Einrichtung in Kombination mit einem Prozessleit- und SCADA System, wobei unter anderem die Cloud-Computing-Einrichtung Steuer- und Sensorsignale vom Prozessleitsystem empfängt, sie weiterverarbeitet und die resultierenden Steuerbefehle zum Prozessleitsystem oder zum SCADA-System zurücksendet.

Die Aufgabe der vorliegenden Erfindung besteht darin, Möglichkeiten zu schaffen, mittels derer Cloud-Computing auch bei sicherheitsgerichteten Anwendungen einsetzbar ist.

Die Aufgabe wird durch ein Betriebsverfahren mit den Merkmalen des Anspruchs 1 gelöst. Vorteilhafte Ausgestaltungen des erfindungsgemäßen Betriebsverfahrens sind Gegenstand der abhängigen Ansprüche 2 bis 4.

Erfindungsgemäß ist vorgesehen, ein Betriebsverfahren der eingangs genannten Art dadurch auszugestalten, dass die Steuereinrichtung zyklisch jeweils
- sicherheitsgerichtete Eingangssignale vom industriellen technischen Prozess in fehlersicherer Weise entgegen nimmt,
- die sicherheitsgerichteten Eingangssignale unter Verwendung eines fehlersicheren Protokolls über eine Anbindung an ein Rechnernetz an einen Rechnerverbund übermittelt,
- über die Anbindung an das Rechnernetz von dem Rechner unter Verwendung des fehlersicheren Protokolls für den industriellen technischen Prozess bestimmte sicherheitsgerichtete Steuersignale entgegen nimmt,
- anhand zusätzlicher Informationen in fehlersicherer Weise entscheidet, ob sie die von dem Rechnerverbund ermittelten, für den industriellen technischen Prozess bestimmten sicherheitsgerichteten Steuersignale als korrekt anerkennt, und
- je nach Ergebnis der Entscheidung entweder den industriellen technischen Prozess entsprechend den sicherheitsgerichteten Steuersignalen in fehlersicherer Weise steuert oder den industriellen technischen Prozess in fehlersicherer Weise in einen sicheren Zustand überführt.

Die Übermittlung der Eingangssignale unter Verwendung des fehlersicheren Protokolls bewirkt, dass auf Seiten des Rechners Fehlübermittlungen und Signalfehler oder sonstige Manipulationen erkennbar sind. Der Rechnerverbund kann somit ggf. entsprechend reagieren. Beispielsweise kann der Rechnerverbund in derartigen Fällen eine Aufforderung zu einer erneuten Übermittlung der Eingangssignale an die Steuereinrichtung richten. Alternativ kann der Rechnerverbund - je nach Lage des Einzelfalls - die Steuersignale derart ermitteln, dass der industrielle technische Prozess in einen sicheren Zustand überführt wird.

Die Übermittlung der Steuersignale unter Verwendung des fehlersicheren Protokolls bewirkt, dass auf Seiten der Steuereinrichtung Fehlübermittlungen und Signalfehler oder sonstige Manipulationen der Steuersignale erkennbar sind. Die Steuereinrichtung ist somit in der Lage, ggf. entsprechend zu reagieren. Beispielsweise kann die Steuereinrichtung in derartigen Fällen eine Anforderung zu einer erneuten Übermittlung der Steuersignale an den Rechnerverbund senden oder den industriellen technischen Prozess in einen sicheren Zustand überführen.

Entscheidend kommt es aber auf das Vorhandensein der zusätzlichen Informationen an. Denn die zusätzlichen Informationen ermöglichen es der Steuereinrichtung, zu entscheiden, ob sie die von dem Rechnerverbund ermittelten, für den industriellen technischen Prozess bestimmten sicherheitsgerichteten Steuersignale als korrekt anerkennen kann oder nicht. Denn erst dadurch wird das zuvor fehlende Glied in der Kette, nämlich die Überprüfung der Ermittlung der Steuersignale, realisiert.

Um die zusätzlichen Informationen zur Verfügung zu stellen, gibt es verschiedene Möglichkeiten. In der Regel werden die zusätzlichen Informationen über das Rechnernetz vom Rechnerverbund zur Verfügung gestellt. Es ist jedoch ebenso möglich, dass die Steuereinrichtung die zusätzlichen Informationen selbst ermittelt.

Der letztgenannte Fall, also dass die Steuereinrichtung die zusätzlichen Informationen selbst ermittelt, ist in der Regel derart ausgestaltet,
- dass die Steuereinrichtung selbst unter Verwendung der vom industriellen technischen Prozess in fehlersicherer Weise entgegen genommenen sicherheitsgerichteten Eingangssignale weitere für den industriellen technischen Prozess bestimmte sicherheitsgerichtete Steuersignale ermittelt,
- dass die zusätzlichen Informationen die von der Steuereinrichtung selbst ermittelten weiteren sicherheitsgerichteten Steuersignalen umfassen und
- dass die Überprüfung der von dem Rechnerverbund an die Steuereinrichtung übermittelten sicherheitsgerichteten Steuersignale auf Korrektheit einen Vergleich der an die Steuereinrichtung übermittelten sicherheitsgerichteten Steuersignale mit den von der Steuereinrichtung selbst ermittelten weiteren sicherheitsgerichteten Steuersignalen umfasst.

Wenn sowohl der Rechnerverbund als auch die Steuereinrichtung ordnungsgemäß arbeiten, sind die von der Steuereinrichtung ermittelten weiteren Steuersignale mit den vom Rechnerverbund ermittelten Steuersignalen inhaltlich identisch. Es muss also auf Seiten der Steuereinrichtung lediglich ein sicherer Vergleich auf Identität implementiert werden. Das ist ohne Weiteres und einfach realisierbar.

Falls die zusätzlichen Informationen der Steuereinrichtung über das Rechnernetz vom Rechnerverbund zur Verfügung gestellt werden, ist es beispielsweise möglich,
- dass die Steuereinrichtung über die Anbindung an das Rechnernetz von dem Rechnerverbund unter Verwendung des fehlersicheren Protokolls zusätzlich zu den für den industriellen technischen Prozess bestimmten sicherheitsgerichteten Steuersignalen - insbesondere zusammen mit den für den industriellen technischen Prozess bestimmten sicherheitsgerichteten Steuersignalen - eine einen Rechenweg des Rechnerverbunds eindeutig identifizierende Signatur entgegen nimmt,
- dass die Steuereinrichtung die sicherheitsgerichteten Eingangssignale unter Verwendung des fehlersicheren Protokolls über die Anbindung an das Rechnernetz ein weiteres Mal an den Rechnerverbund übermittelt,
- dass die Steuereinrichtung über die Anbindung an das Rechnernetz von dem Rechnerverbund unter Verwendung des fehlersicheren Protokolls weitere für den industriellen technischen Prozess bestimmte sicherheitsgerichtete Steuersignale sowie zusätzlich zu den für den industriellen technischen Prozess bestimmten weiteren sicherheitsgerichteten Steuersignalen - insbesondere zusammen mit den für den industriellen technischen Prozess bestimmten weiteren sicherheitsgerichteten Steuersignalen - eine einen weiteren Rechenweg des Rechnerverbundes eindeutig identifizierende weitere Signatur entgegen nimmt,
- dass die zusätzlichen Informationen die auf dem weiteren Rechenweg ermittelten weiteren sicherheitsgerichteten Steuersignale und die Signaturen der Rechenwege umfassen und
- dass die Überprüfung der von dem Rechnerverbund an die Steuereinrichtung übermittelten sicherheitsgerichteten Steuersignale auf Korrektheit einen Vergleich der von dem Rechnerverbund entgegen genommenen sicherheitsgerichteten Steuersignale miteinander und einen Vergleich der von dem Rechnerverbund entgegen genommenen Signaturen miteinander umfasst.

In diesem Fall ist durch den Vergleich der Signaturen ermittelbar, ob die Steuersignale beispielsweise von physikalisch verschiedenen Rechnern und/oder mittels unterschiedlicher Algorithmen - Stichwort "coded processing" oder "diversitäre Programmierung" - ermittelt wurden. Der Vergleich der Steuersignale selbst kann auf inhaltliche Identität gerichtet sein.

Es ist sogar möglich, den Vergleich der Steuersignale innerhalb des Rechnerverbundes durchzuführen und das Vergleichsergebnis an die Steuereinrichtung zu übermitteln. In diesem Fall ist daher vorgesehen,
- dass die Steuereinrichtung die sicherheitsgerichteten Eingangssignale unter Verwendung des fehlersicheren Protokolls über die Anbindung an das Rechnernetz ein weiteres Mal an den Rechnerverbund übermittelt,
- dass die Steuereinrichtung über die Anbindung an das Rechnernetz unter Verwendung des fehlersicheren Protokolls zusätzlich zu den für den industriellen technischen Prozess bestimmten sicherheitsgerichteten Steuersignalen - insbesondere zusammen mit den für den industriellen technischen Prozess bestimmten sicherheitsgerichteten Steuersignalen - Prüfinformationen entgegen nimmt,
- dass die zusätzlichen Informationen die Prüfinformationen umfassen und
- dass die Überprüfung der an die Steuereinrichtung übermittelten sicherheitsgerichteten Steuersignale auf Korrektheit eine Überprüfung der Prüfinformationen auf Übereinstimmung mit Sollprüfinformationen umfasst.

Der Rechnerverbund muss in diesem Fall einen sicheren Vergleicher umfassen, der die Überprüfung der Steuersignale auf Identität und der Rechenwege auf Nichtidentität vornimmt. Der sichere Vergleicher fügt den Steuersignalen die Prüfinformationen hinzu, beispielsweise ein elektronisches Prüfsiegel oder ein elektronisches Zertifikat. Das Hinzufügen erfolgt selbstverständlich nur dann, wenn die Steuersignale von den Rechnern korrekt ermittelt wurden und die Rechenwege voneinander verschieden sind. Die Steuereinrichtung muss in diesem Fall daher nur die Prüfinformationen auf Übereinstimmung mit Sollprüfinformationen überprüfen. Die entsprechende Wirkungsweise des Vergleichers muss in diesem Fall auf Seiten des Rechnerverbundes gewährleistet sein.

Die Aufgabe wird weiterhin durch ein Steuerprogramm der eingangs genannten Art gelöst, wobei die Abarbeitung des Maschinencodes durch die Prozessoreinrichtung bewirkt, dass die Steuereinrichtung ein erfindungsgemäßes Betriebsverfahren ausführt.

Die Aufgabe wird weiterhin durch eine Steuereinrichtung für eine industrielle technische Einrichtung gelöst, wobei die Steuereinrichtung mit einem erfindungsgemäßen Steuerprogramm programmiert ist.

Die oben beschriebenen Eigenschaften, Merkmale und Vorteile der vorliegenden Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Steueranordnung
- FIG 2 bis 6: Ablaufdiagramme und
- FIG 7: eine weitere Steueranordnung.

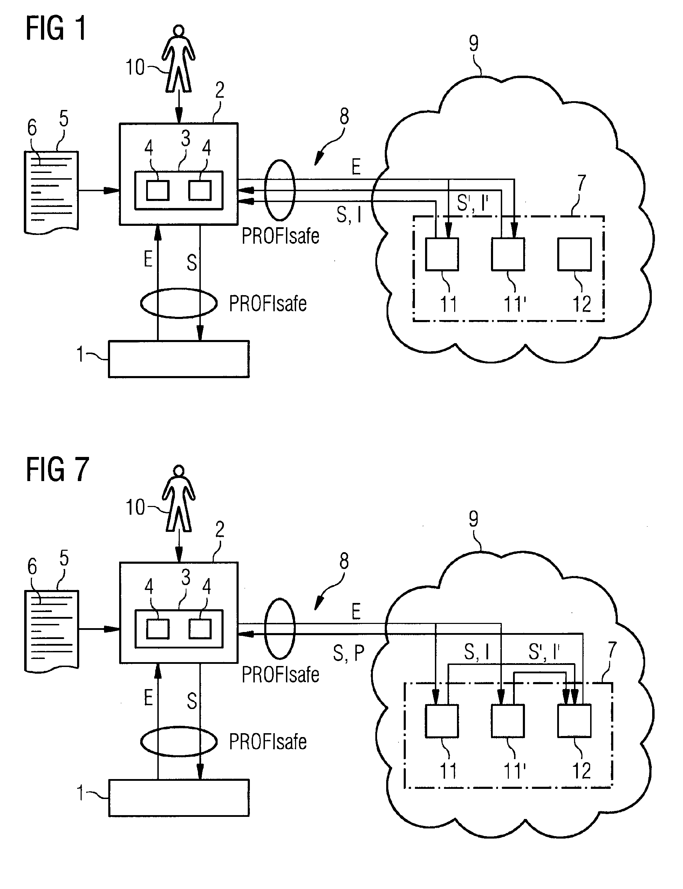

Gemäß FIG 1 wird ein industrieller technischer Prozess 1 von einer Steuereinrichtung 2 gesteuert. Bei dem industriellen technischen Prozess 1 kann es sich um einen beliebigen Prozess handeln, beispielsweise eine Brennersteuerung, eine Pressensteuerung, eine chemische Anlage, eine Abfüllanlage, einen Aufzug usw.. Unabhängig von der Art des industriellen technischen Prozesses muss der industrielle technische Prozess von der Steuereinrichtung 2 jedoch sicher gesteuert werden.

Die Steuereinrichtung 2 umfasst eine Prozessoreinrichtung 3. Die Prozessoreinrichtung 3 umfasst mindestens einen Prozessor 4. Oftmals umfasst die Prozessoreinrichtung 3 mehrere Prozessoren 4, die sich gegenseitig überprüfen können. "Sicher" ist in diesem Zusammenhang im Sinne von "fehlersicher" zu verstehen. Es muss also gewährleistet sein, dass ein einzelner Fehler nicht unbemerkt zu einem gefährlichen Zustand des industriellen technischen Prozesses 1 führen kann. Beispielsweise müssen daher Eingangssignale E in der Regel von entsprechenden Sensoren mehrfach erfasst werden und an die Steuereinrichtung 2 weitergeleitet werden. In der Steuereinrichtung 2 müssen eine sichere Datenverarbeitung und eine sichere Überprüfung der ermittelten Ergebnisse erfolgen, so dass auch ein einzelner Fehler in der Steuereinrichtung 2 erkannt werden kann. Weiterhin müssen Steuersignale S auf fehlersichere Weise an den industriellen technischen Prozess 1 ausgegeben werden. Die Steuersignale S werden daher redundant an mehrere Aktoren ausgegeben. Das Überführen in den sicheren Zustand erfolgt bereits dann, wenn einer der Aktoren entsprechend reagiert. Beispielsweise sind zu diesem Zweck in der Regel mehrere in Reihe geschaltete Schütze vorgesehen, wenn der industrielle technische Prozess 1 sicher von einer elektrischen Stromversorgung getrennt werden soll.

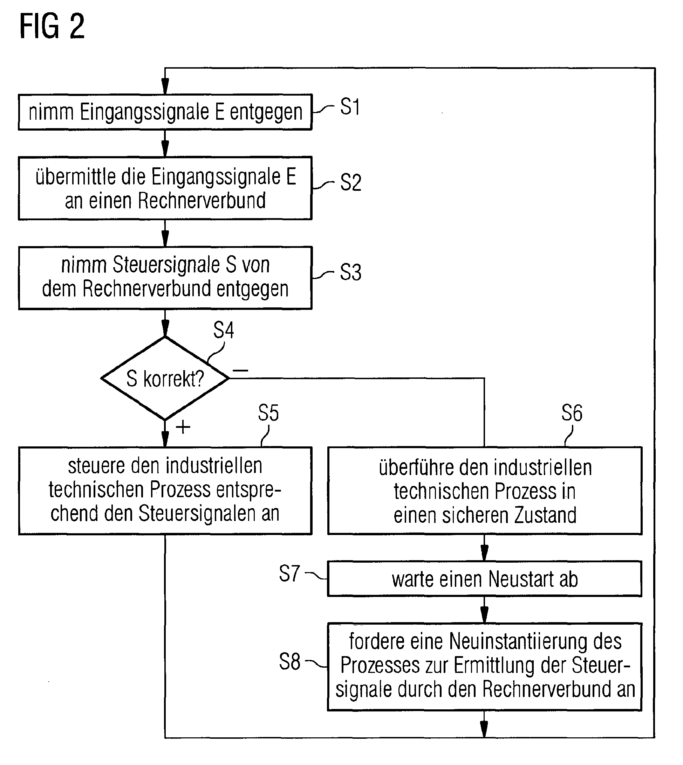

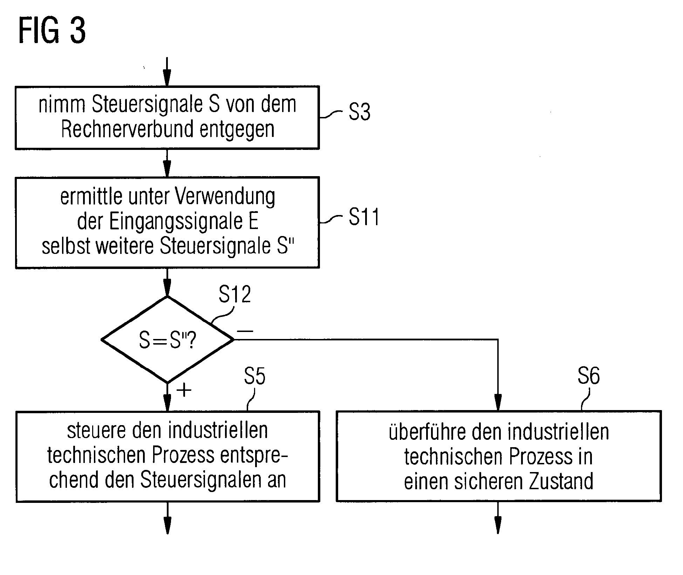

Die Steuereinrichtung 2 ist mit einem Steuerprogramm 5 programmiert. Das Steuerprogramm 5 umfasst Maschinencode 6, der von der Prozessoreinrichtung 3 unmittelbar abarbeitbar ist. Die Abarbeitung des Maschinencodes 6 durch die Prozessoreinrichtung 3 bewirkt, dass die Steuereinrichtung 2 ein Betriebsverfahren ausführt, das nachfolgend in Verbindung mit FIG 2 näher erläutert wird. Ergänzend ist in diesem Zusammenhang und auch in Verbindung mit der Erläuterung der FIG 3 bis 5 stets FIG 1 mit heranzuziehen.

Gemäß FIG 1 nimmt die Steuereinrichtung 2 in einem Schritt S1 vom industriellen technischen Prozess 1 die Eingangssignale E entgegen. Bei den Eingangssignalen E handelt es sich um sicherheitsgerichtete Eingangssignale. Sie werden von der Steuereinrichtung 2 in fehlersicherer Weise entgegengenommen. Beispielsweise können die Eingangssignale E entsprechend der Darstellung von FIG 1 gemäß einem PROFIsafe-Protokoll von Sensoren (in den FIG nicht dargestellt) an die Steuereinrichtung 2 übermittelt werden. "PROFIsafe" ist ein genormtes Protokoll zur sicheren Datenübermittelung, siehe beispielsweise die IEC 61 784-3-3.

In einem Schritt S2 übermittelt die Steuereinrichtung 2 die sicherheitsgerichteten Eingangssignale E an einen Rechnerverbund 7. Die Übermittlung erfolgt gemäß FIG 1 über eine Anbindung 8 an ein Rechnernetz 9. Das Rechnernetz 9 kann beispielsweise ein LAN (= Local Area Network) sein. Alternativ kann es sich um ein WAN (= Wide Area Network) oder um das WWW (= World Wide Web) handeln. Die Übermittlung erfolgt über ein fehlersicheres Protokoll, beispielsweise das bereits erwähnte PROFIsafe-Protokoll oder https.

Der Rechnerverbund 7 hat die Aufgabe, unter Verwendung der Eingangssignale E des industriellen technischen Prozesses 1 und etwaiger weiterer Zustände - beispielsweise von Zeitgebern und/oder Merkern des Rechnerverbundes 7 - Steuersignale S für den industriellen technischen Prozess 1 zu ermitteln, also die für den industriellen technischen Prozess 1 bestimmten Steuersignale S. Der Rechnerverbund 7 übermittelt die von ihm ermittelten Steuersignale S an die Steuereinrichtung 2. Die Übermittlung der Steuersignale S erfolgt auf dem gleichen Weg und auf die gleiche Weise wie die Übermittlung der Eingangssignale E, also über die Anbindung 8 der Steuereinrichtung 2 an das Rechnernetz 9 und unter Verwendung des sicheren Protokolls. Die Steuereinrichtung 2 nimmt die Steuersignale S in einem Schritt S3 von dem Rechnerverbund 7 entgegen.

Die Steuersignale S können - analog zu den Eingangssignalen E - sicherheitsgerichtet sein. Die Steuersignale S müssen daher von der Steuereinrichtung 2 als korrekt anerkannt werden. Etwaige Fehler bei der Übermittlung können von der Steuereinrichtung 2 aufgrund der Verwendung des sicheren Protokolls erkannt werden. Die Prüfung auf korrekte Ermittlung der Steuersignale S muss jedoch von der Steuereinrichtung 2 anhand zusätzlicher Informationen S"; S', I, I'; P durchgeführt werden. Diese Prüfung nimmt die Steuereinrichtung 2 in einem Schritt S4 in fehlersicherer Weise vor. Je nach Ergebnis der Überprüfung führt die Steuereinrichtung 2 entweder einen Schritt S5 oder einen Schritt S6 aus.

Falls die Steuersignale S von der Steuereinrichtung 2 als korrekt anerkannt werden, steuert die Steuereinrichtung 2 im Schritt S5 den industriellen technischen Prozess 1 entsprechend den sicherheitsgerichteten Steuersignalen S in fehlersicherer Weise an. Falls die Steuersignale S von der Steuereinrichtung 2 nicht als korrekt anerkannt werden, überführt die Steuereinrichtung 2 den industriellen technischen Prozess 1 im Schritt S6 in fehlersicherer Weise in einen sicheren Zustand.

Es ist möglich, dass zusätzlich ein Schritt S7 vorhanden ist. Im Schritt S7 wartet die Steuereinrichtung 2 ggf. einen Neustart des obenstehend beschriebenen Ablaufs ab. Der Neustart kann insbesondere eine Handlung einer Bedienperson 10 erfordern, beispielsweise das Betätigen einer Reset-Taste. Alternativ kann der Schritt S7 entfallen. In diesem Fall nimmt die Steuereinrichtung 2 den Normalbetrieb (in dem der Schritt S5 ausgeführt wird) von selbst wieder auf, sobald sie die von dem Rechnerverbund 7 übermittelten Steuersignale S wieder als korrekt anerkennt.

Alternativ oder zusätzlich zum Schritt S7 kann ein Schritt S8 vorhanden sein. Falls der Schritt S8 vorhanden ist, fordert die Steuereinrichtung 2 im Schritt S8 eine Neuinstantiierung des (rechentechnischen) Prozesses zur Ermittlung der Steuersignale S durch den Rechnerverbund 7 an. Diese Neuinstantiierung kann beispielsweise - zufällig oder gezielt - zum Ergebnis haben, dass ein anderer Rechner 11' des Rechnerverbundes 7 als zuvor mit der Ermittlung der Steuersignale S beauftragt wird.

Aus den obigen Ausführungen ist insbesondere ersichtlich, dass die Steuereinrichtung 2 die Schritte S1 bis S6 (und ggf. auch die Schritte S7 und/oder S8) zyklisch ausführt. Insbesondere der Normalbetrieb (wenn also der Schritt S5 ausgeführt wird) wird pro Sekunde mehrfach ausgeführt, meist 20 x bis 100 x pro Sekunde. Gleiches gilt, wenn der Schritt S7 und/oder der Schritt S8 nicht vorhanden sind und der Sonderbetrieb ausgeführt wird, also vom Schritt S4 zum Schritt S6 übergegangen wird.

Für die Implementierung des Schrittes S4 gibt es verschiedene Möglichkeiten. Beispielsweise kann gemäß FIG 3 der Schritt S4 in Form von Schritten S11 und S12 implementiert sein.

Im Schritt S11 ermittelt die Steuereinrichtung 2 selbst weitere sicherheitsgerichtete Steuersignale S". Die weiteren Steuersignale S" sind ebenfalls für den industriellen technischen Prozess 1 bestimmt. Die weiteren Steuersignale S" korrespondieren im Normalfall - wenn also sowohl der Rechnerverbund 7 als auch die Steuereinrichtung 2 ordnungsgemäß funktionieren - inhaltlich 1:1 mit den vom Rechnerverbund 7 ermittelten Steuersignalen S. Die Steuereinrichtung 2 ermittelt die weiteren Steuersignale S" somit - analog zum Rechnerverbund 7 - unter Verwendung der sicherheitsgerichteten Eingangssignale E, welche die Steuereinrichtung 2 vom industriellen technischen Prozess 1 in fehlersicherer Weise entgegengenommen hat. Gegebenenfalls verwendet die Steuereinrichtung 2 im Rahmen der Ermittlung der weiteren Steuersignale S" - analog zum Rechnerverbund 7 - weitere Zustände, beispielsweise die Zustände von steuerungsinternen Zeitgebern und/oder Merkern.

Im Schritt S12 vergleicht die Steuereinrichtung 2 in fehlersicherer Weise die vom Rechnerverbund 7 ermittelten Steuersignale S mit den von der Steuereinrichtung 2 ermittelten weiteren Steuersignalen S". Die Steuereinrichtung 2 erkennt die vom Rechnerverbund 7 ermittelten Steuersignale S als korrekt an, wenn sie mit den von der Steuereinrichtung 2 ermittelten weiteren Steuersignalen S" übereinstimmen.

Die zusätzlichen Informationen S", S', I, I'; P umfassen im Rahmen der Vorgehensweise von FIG 3 somit die im Schritt S11 ermittelten weiteren Steuersignale S". Insbesondere können die zusätzlichen Informationen S"; S', I, I'; P mit den im Schritt S11 ermittelten weiteren Steuersignalen S" identisch sein.

Die Vorgehensweise von FIG 3 ist insbesondere dann sinnvoll, wenn im Sinne einer diversitären Programmierung - oftmals auch als "coded processing" bezeichnet - die Steuersignale S vom Rechnerverbund 7 mittels eines Algorithmus ermittelt werden, der von dem Algorithmus verschieden ist, mit dem die Steuereinrichtung 2 die weiteren Steuersignale S" ermittelt. In diesem Fall kann insbesondere der rechenintensivere Algorithmus (der meist sogar erheblich rechenintensiver ist) vom Rechnerverbund 7 ausgeführt werden.

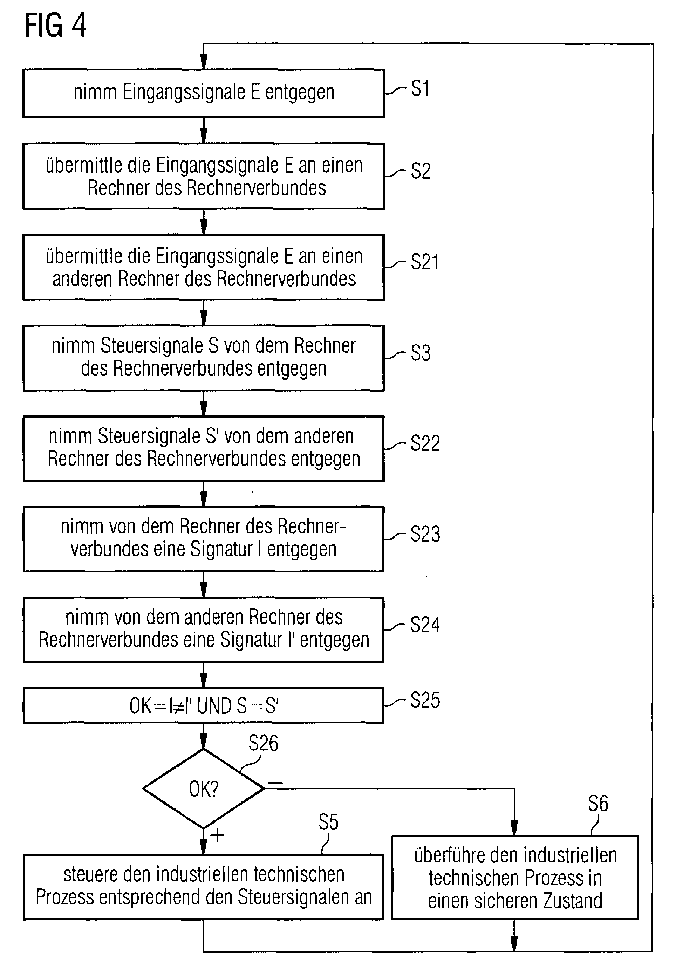

Alternativ zu der Vorgehensweise von FIG 3 ist es möglich, gemäß FIG 4 vorzugehen. Gemäß FIG 4 ist der Schritt S4 von FIG 2 in Form von Schritten S21 bis S26 implementiert. Im Rahmen des Schrittes S2, der bei FIG 4 ebenfalls vorhanden ist, werden die Eingangssignale E von der Steuereinrichtung 2 an irgendeinen Rechner 11 des Rechnerverbundes 7 übermittelt.

Im Schritt S21 übermittelt die Steuereinrichtung 2 die sicherheitsgerichteten Eingangssignale E ebenfalls an einen Rechner 11' des Rechnerverbundes 7 (siehe FIG 1). Der Schritt S21 entspricht somit inhaltlich dem Schritt S2. Der Unterschied zum Schritt S2 besteht jedoch darin, dass die Übermittlung im Schritt S21 an einen anderen physikalischen Rechner 11' erfolgt als im Schritt S2. Der Rechner 11' des Schrittes S21 ist also nicht mit dem Rechner 11 des Schrittes S2 physikalisch identisch.

Der weitere Rechner 11' ermittelt - wie zuvor bei FIG 3 die Steuereinrichtung 2 - die weiteren Steuersignale S'. Der weitere Rechner 11' übermittelt die von ihm übermittelten weiteren Steuersignale S' an die Steuereinrichtung 2. Die Steuereinrichtung 2 nimmt die weiteren Steuersignale S' im Schritt S22 entgegen. Der Schritt S22 entspricht somit inhaltlich dem Schritt S3. Der Unterschied zum Schritt S3 besteht - analog zum Unterschied zwischen den Schritten S2 und S21 - darin, dass die Übermittlung der weiteren Steuersignale S' von dem weiteren Rechner 11' ausgeht, nicht von dem Rechner 11 des Schrittes S3.

In den Schritten S23 und S24 nimmt die Steuereinrichtung 2 von den Rechnern 11 jeweils eine Signatur I, I' entgegen. Die jeweilige Signatur I, I' identifiziert den jeweiligen Rechner 11, 11' des Rechnerverbundes 7 eindeutig. Die Übermittlung der Signaturen I, I' erfolgt auf die gleiche Weise wie die Übermittlung der Steuersignale S, S', also über die Anbindung 8 der Steuereinrichtung 2 an das Rechnernetz 9, von dem jeweiligen Rechner 11, 11' und unter Verwendung des fehlersicheren Protokolls.

Im Schritt S25 ermittelt die Steuereinrichtung 2 in fehlersicherer Weise den Wert einer logischen Variablen OK. Die logische Variable OK nimmt den Wert WAHR dann und nur dann an, wenn
- die Signaturen I, I' der Rechner 11, 11' nicht miteinander übereinstimmen und
- die Steuersignale S und die weiteren Steuersignale S' miteinander übereinstimmen.

In Schritt S26 überprüft die Steuereinrichtung 2 den Wert der logischen Variable OK.

Im Rahmen der Vorgehensweise von FIG 4 umfassen die zusätzlichen Informationen S"; S', I, I'; P somit die Signaturen I, I' der Rechner 11, 11' und die vom weiteren Rechner 11' ermittelten weiteren Steuersignale S'. Insbesondere können die zusätzlichen Informationen S"; S', I, I'; P mit den Signaturen I, I' und den weiteren Steuersignalen S' identisch sein. Die Überprüfung der Steuersignale S auf Korrektheit umfasst einen Vergleich der Signaturen I, I' miteinander und einen Vergleich der von den Rechnern 11, 11' ermittelten Steuersignale S, S' miteinander.

Die Ermittlung der weiteren Steuersignale S' auf einem weiteren Rechner 11', der ein vom Rechner 11 physikalisch verschiedener Rechner 11' ist, entspricht einem weiteren Rechenweg im Sinne der vorliegenden Erfindung. Alternativ oder zusätzlich ist es möglich, die weiteren Steuersignale S' mittels eines anderen Algorithmus - Stichwort wieder "coded processing" - zu ermitteln. Auch diese Vorgehensweise entspricht einem weiteren Rechenweg im Sinne der vorliegenden Erfindung.

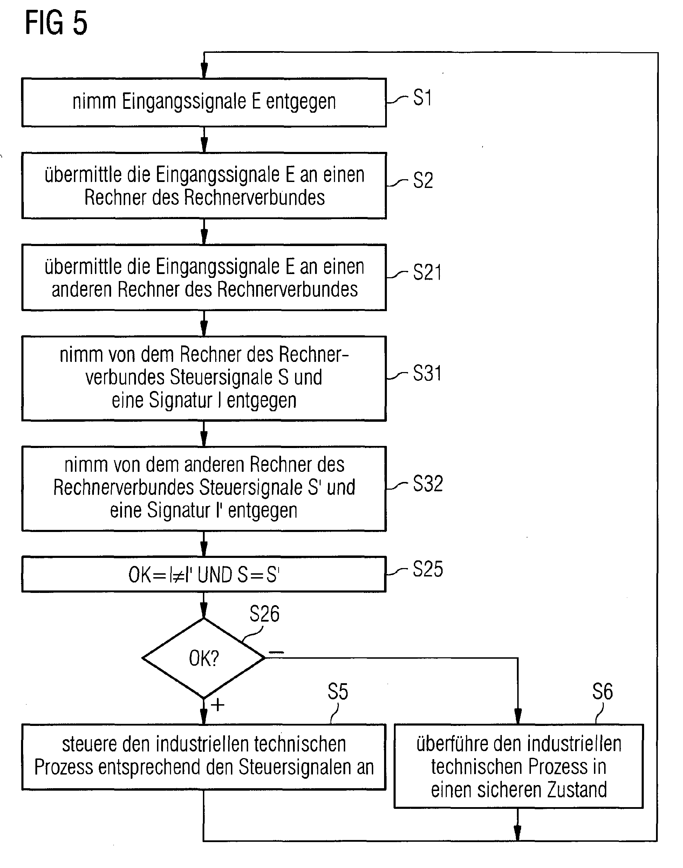

Die Vorgehensweise von FIG 5 entspricht im Wesentlichen der von FIG 4. Der Unterschied besteht darin, dass die Schritte S3, S22, S23 und S24 durch Schritte S31 und S32 ersetzt sind. Der Schritt S31 entspricht der Kombination der Schritte S3 und S23. Der Schritt S32 entspricht der Kombination der Schritte S22 und S24. Bei der Vorgehensweise von FIG 5 wird also die jeweilige Signatur I, I' vom jeweiligen Rechner 11, 11' zusammen mit den jeweiligen Steuersignalen S, S' an die Steuereinrichtung 2 übermittelt und von der Steuereinrichtung 2 entgegen genommen.

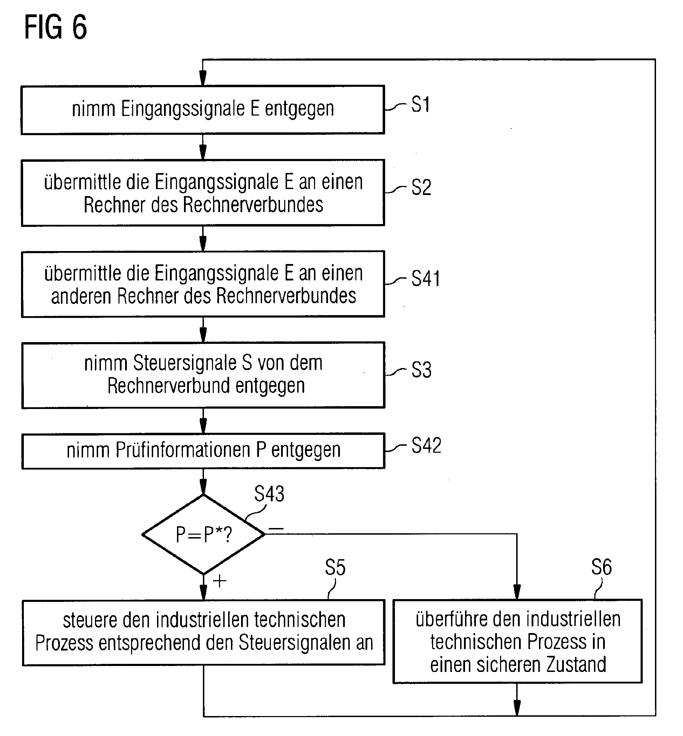

Alternativ zu den Vorgehensweisen der FIG 3, 4 und 5 ist es möglich, gemäß FIG 6 vorzugehen. FIG 6 wird nachstehend in Verbindung mit FIG 7 erläutert. FIG 7 zeigt zwar im Wesentlichen die gleiche Steueranordnung wie FIG 1, zeigt jedoch einen anderen Datenfluss. Die Darstellung in einer eigenen FIG erfolgt, um FIG 1 nicht zu überfrachten.

Gemäß FIG 6 ist der Schritt S4 von FIG 2 in Form von Schritten S41 bis S43 realisiert.

Im Schritt S41 übermittelt die Steuereinrichtung 2 - analog zum Schritt S21 von FIG 4 - die sicherheitsgerichteten Eingangssignale E ein weiteres Mal an den Rechnerverbund 7. Sie werden von dem weiteren Rechner 11' des Rechnerverbundes 7 entgegen genommen.

Die Rechner 11, 11' ermitteln die von ihnen jeweils ermittelten Steuersignale S, S' sowie ihre jeweilige Signatur I, I' an einen sicheren Vergleicher 12. Der sichere Vergleicher 12 ist - ebenso wie die Rechner 11, 11' - Bestandteil des Rechnerverbundes 7. Er kann innerhalb des Rechnerverbundes 7 als eigenständige Struktur realisiert sein. Alternativ kann der sichere Vergleicher 12 in einem oder - bevorzugt - in beiden der Rechner 11, 11' realisiert sein. Der sichere Vergleicher 12 führt einen sicheren Vergleich der sicherheitsgerichteten Steuersignale S, S' und der Signaturen I, I' durch. Inhaltlich entspricht die Funktionalität des sicheren Vergleichers 12 den Schritten S25 und S26 von FIG 4.

Der Vergleich bewirkt, dass die Steuersignale S an die Steuereinrichtung 2 übermittelt werden, so dass die Steuereinrichtung 2 die Steuersignale S im Schritt S3 entgegen nehmen kann. Die Übermittlung an die Steuereinrichtung 2 kann beispielsweise dadurch erfolgen, dass der sichere Vergleicher 12 selbst die Steuersignale S an die Steuereinrichtung 2 übermittelt. Alternativ kann der sichere Vergleicher 12 an einen der Rechner 11, 11' ein entsprechendes Freigabesignal übermitteln.

Zusätzlich übermittelt der sichere Vergleicher 12 Prüfinformationen P an die Steuereinrichtung 2. Die Steuereinrichtung 2 nimmt die Prüfinformationen P im Schritt S42 entgegen. Die Prüfinformationen P sind dafür charakteristisch, dass die Steuersignale S, S' von den Rechnern 11, 11' korrekt ermittelt wurden. Beispielsweise kann es sich um eine elektronische Signatur oder ein elektronisches Prüfzertifikat handeln.

Die Übermittlung der Prüfinformationen P an die Steuereinrichtung 2 erfolgt auf die gleiche Weise wie die Übermittlung der Steuersignale S, S', also über die Anbindung 8 der Steuereinrichtung 2 an das Rechnernetz 9, von dem Rechnerverbund 7 (genauer: von dem Vergleicher 12 des Rechnerverbundes 7) und unter Verwendung des fehlersicheren Protokolls. Die Übermittlung kann - analog zu den Schritten S31 und S32 von FIG 5 - zusammen mit den Steuersignalen S erfolgen.

Im Schritt S43 vergleicht die Steuereinrichtung 2 auf fehlersichere Weise die übermittelten Prüfinformationen P auf Übereinstimmung mit Sollprüfinformationen P*. Insbesondere kann die Steuereinrichtung 2 die Prüfinformationen P zu diesem Zweck analysieren. Auch ein Vergleich mit den übermittelten Steuersignalen S ist möglich. In diesem Fall sind die Sollprüfinformationen P* von den übermittelten Steuersignalen S abhängig. Alternativ können die Sollprüfinformationen P* von den übermittelten Steuersignalen S unabhängig sein.

Im Rahmen der Vorgehensweise von FIG 6 umfassen die zusätzlichen Informationen S"; S', I, I'; P somit die Prüfinformationen P. Insbesondere können sie mit den Prüfinformationen identisch sein.

Die Ausgestaltung des Prinzips von FIG 2 entsprechend den konkreten Vorgehensweisen von FIG 3, von FIG 4 und FIG 5 sowie von FIG 6 können einzeln realisiert sein. Alternativ ist es möglich, sie miteinander zu kombinieren. Dies kann insbesondere sinnvoll sein, um einen noch höheren Sicherheitsgrad zu erreichen oder eine höhere Redundanz (beispielsweise im Sinne einer Zwei-von-drei-Logik) zu erreichen.

Durch die erfindungsgemäßen Gestaltungen wird erreicht, dass auch sicherheitsgerichtete Steuerungsfunktionen mittels der Infrastruktur des Cloud-Computing gelöst werden können. Es stehen damit auch für sicherheitsgerichtete Steuerungsfunktionen die (nahezu) unbegrenzten Ressourcen der Cloud statisch oder dynamisch zur Verfügung. Es ist daher auch die Lösung komplexer Steuerungsaufgaben mittels einer relativ leistungsschwachen Steuereinrichtung 2 möglich, da die rechenintensiven Aufgaben in die Cloud verlagert werden können. Dennoch ist auf einfache Weise gewährleistet, dass ein Ausfall der beteiligten Elemente 11, 11', 12 des Rechnerverbundes 7 (= der Cloud) erkannt werden kann und ein Rückfall in den sicheren Zustand möglich ist. Die gesamte Kette, gerechnet von der Erfassung der Eingangssignale E bis zur Ausgabe der Steuersignale S an den industriellen technischen Prozess 1, bleibt abgesichert. Insbesondere kann erkannt werden, wenn eine vermeintlich redundante Bearbeitung letztlich nur in zwei virtuell unterschiedlichen Rechnern erfolgt, die physikalisch durch denselben Rechner 11 oder 11' des Rechnerverbundes 7 realisiert sind, oder ohne diversitäre Programmierung erfolgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

## Patentansprüche

1. Betriebsverfahren für eine Steuereinrichtung (2) für einen industriellen technischen Prozess (1), wobei die Steuereinrichtung (2) zyklisch jeweils
- sicherheitsgerichtete Eingangssignale (E) vom industriellen technischen Prozess (1) in fehlersicherer Weise entgegen nimmt,
- die sicherheitsgerichteten Eingangssignale (E) unter Verwendung eines fehlersicheren Protokolls über eine Anbindung (8) an ein Rechnernetz (9) an einen Rechnerverbund (7) übermittelt,
- über die Anbindung (8) an das Rechnernetz (9) von dem Rechnerverbund (7) unter Verwendung des fehlersicheren Protokolls für den industriellen technischen Prozess (1) bestimmte sicherheitsgerichtete Steuersignale (S) entgegen nimmt,
- anhand zusätzlicher Informationen (S"; S', I, I'; P) in fehlersicherer Weise entscheidet, ob sie die von dem Rechnerverbund (7) ermittelten, für den industriellen technischen Prozess (1) bestimmten sicherheitsgerichteten Steuersignale (S) als korrekt anerkennt, und
- je nach Ergebnis der Entscheidung entweder den industriellen technischen Prozess (1) entsprechend den sicherheitsgerichteten Steuersignalen (S) in fehlersicherer Weise steuert oder den industriellen technischen Prozess (1) in fehlersicherer Weise in einen sicheren Zustand überführt.

2. Betriebsverfahren nach Anspruch 1,
**dadurch gekennzeichnet,**
- **dass** die Steuereinrichtung (2) selbst unter Verwendung der vom industriellen technischen Prozess (1) in fehlersicherer Weise entgegen genommenen sicherheitsgerichteten Eingangssignale (E) weitere für den industriellen technischen Prozess (1) bestimmte sicherheitsgerichtete Steuersignale (S") ermittelt,
- **dass** die zusätzlichen Informationen (S"; S', I, I'; P) die von der Steuereinrichtung (2) selbst ermittelten weiteren sicherheitsgerichteten Steuersignalen (S") umfassen und
- **dass** die Überprüfung der von dem Rechnerverbund (7) an die Steuereinrichtung (2) übermittelten sicherheitsgerichteten Steuersignale (S) auf Korrektheit einen Vergleich der an die Steuereinrichtung (2) übermittelten sicherheitsgerichteten Steuersignale (S) mit den von der Steuereinrichtung (2) selbst ermittelten weiteren sicherheitsgerichteten Steuersignalen (S") umfasst.

3. Betriebsverfahren nach Anspruch 1,
**dadurch gekennzeichnet,**
- **dass** die Steuereinrichtung (2) über die Anbindung (8) an das Rechnernetz (9) von dem Rechnerverbund (7) unter Verwendung des fehlersicheren Protokolls zusätzlich zu den für den industriellen technischen Prozess (1) bestimmten sicherheitsgerichteten Steuersignalen (S) - insbesondere zusammen mit den für den industriellen technischen Prozess (1) bestimmten sicherheitsgerichteten Steuersignalen (S) - eine einen Rechenweg des Rechnerverbundes (7) eindeutig identifizierende Signatur (I) entgegen nimmt,
- **dass** die Steuereinrichtung (2) die sicherheitsgerichteten Eingangssignale (E) unter Verwendung des fehlersicheren Protokolls über die Anbindung (8) an das Rechnernetz (9) ein weiteres Mal an den Rechnerverbund (7) übermittelt,
- **dass** die Steuereinrichtung (2) über die Anbindung (8) an das Rechnernetz (9) von dem Rechnerverbund (7) unter Verwendung des fehlersicheren Protokolls weitere für den industriellen technischen Prozess (1) bestimmte sicherheitsgerichtete Steuersignale (S') sowie zusätzlich zu den für den industriellen technischen Prozess (1) bestimmten weiteren sicherheitsgerichteten Steuersignalen (S') - insbesondere zusammen mit den für den industriellen technischen Prozess (1) bestimmten weiteren sicherheitsgerichteten Steuersignalen (S') - eine einen weiteren Rechenweg des Rechnerverbundes (7) eindeutig identifizierende weitere Signatur (I') entgegen nimmt,
- **dass** die zusätzlichen Informationen (S"; S', I, I'; P) die von dem Rechnerverbund (7) entgegen genommenen weiteren sicherheitsgerichteten Steuersignale (S') und die Signaturen (I, I') der Rechenwege umfassen und
- **dass** die Überprüfung der von dem Rechnerverbund (7) an die Steuereinrichtung (2) übermittelten sicherheitsgerichteten Steuersignale (S) auf Korrektheit einen Vergleich der von dem Rechnerverbund (7) entgegen genommenen sicherheitsgerichteten Steuersignale (S, S') miteinander und einen Vergleich der von dem Rechnerverbund (7) entgegen genommenen Signaturen (I, I') miteinander umfasst.

4. Betriebsverfahren nach Anspruch 1,
**dadurch gekennzeichnet,**
- **dass** die Steuereinrichtung (2) die sicherheitsgerichteten Eingangssignale (E) unter Verwendung des fehlersicheren Protokolls über die Anbindung (8) an das Rechnernetz (9) ein weiteres Mal an den Rechnerverbund (7) übermittelt,
- **dass** die Steuereinrichtung (2) über die Anbindung (8) an das Rechnernetz (9) unter Verwendung des fehlersicheren Protokolls zusätzlich zu den für den industriellen technischen Prozess (1) bestimmten sicherheitsgerichteten Steuersignalen (S) - insbesondere zusammen mit den für den industriellen technischen Prozess (1) bestimmten sicherheitsgerichteten Steuersignalen (S) - Prüfinformationen (P) entgegen nimmt,
- **dass** die zusätzlichen Informationen (S"; S', I, I'; P) die Prüfinformationen (P) umfassen und
- **dass** die Überprüfung der an die Steuereinrichtung (2) übermittelten sicherheitsgerichteten Steuersignale (S) auf Korrektheit eine Überprüfung der Prüfinformationen (P) auf Übereinstimmung mit Sollprüfinformationen (P*) umfasst.

5. Steuerprogramm für eine Steuereinrichtung (2) für einen industriellen technischen Prozess (1), wobei das Steuerprogramm Maschinencode (6) umfasst, der von einer Prozessoreinrichtung (3) der Steuereinrichtung (2) unmittelbar abarbeitbar ist und dessen Abarbeitung durch die Prozessoreinrichtung (3) bewirkt, dass die Steuereinrichtung (2) ein Betriebsverfahren nach einem der obigen Ansprüche ausführt.

6. Steuereinrichtung für einen industriellen technischen Prozess (1), wobei die Steuereinrichtung eine Prozessoreinrichtung (3) umfasst, wobei die Steuereinrichtung mit einem Steuerprogramm (5) nach Anspruch 5 programmiert ist, so dass sie im Betrieb aufgrund der Abarbeitung des Maschinencodes (6) des Steuerprogramms (5) durch die Prozessoreinrichtung (3) ein Betriebsverfahren nach einem der Ansprüche 1 bis 4 ausführt.

## Claims

1. Operating method for a control device (2) for an industrial-technical process (1), wherein the control device (2) in each case cyclically
- accepts safety-oriented input signals (E) from the industrial-technical process (1) in a fail-safe manner,
- transfers the safety-oriented input signals (E) to a Cloud (7) using a fail-safe protocol over a link (8) to a computer network (9),
- receives specific safety-oriented control signals (S) from the Cloud (7) using the fail-safe protocol for the industrial-technical process (1) via the link (8) to the computer network (9),
- on the basis of additional information (S"; S', I, I'; P), decides in a fail-safe manner whether it recognises as correct the safety-oriented control signals (S) determined by the Cloud (7) intended for the industrial-technical process (1), and
- depending on the results of the decision, either controls the industrial-technical process (1) in accordance with the safety-oriented control signals (S) in a fail-safe manner or puts the industrial-technical process (1) into a safe state in a fail-safe manner.

2. Operating method according to claim 1,
**characterised in**
- **that** the control device (2) itself, using the safety-oriented input signals (E) accepted in a fail-safe manner from the industrial-technical process (1), determines further safety-oriented control signals (S") intended for the industrial-technical process (1),
- **that** the additional information (S"; S', I, I'; P) comprises the further safety-oriented control signals (S") determined by the control device (2) itself and
- **that** the checking for correctness of the safety-oriented control signals (S) transferred from the Cloud (7) to the control device (2) comprises a comparison between the safety-oriented control signals (S) transferred to the control device (2) and the further safety-oriented control signals (S") determined by the control device (2) itself.

3. Operating method according to claim 1,
**characterised in**
- **that** the control device (2), using the fail-safe protocol, accepts from the Cloud (7) over the link (8) to the computer network (9), in addition to the safety-oriented control signals (S) intended for the industrial-technical process (1) - especially together with the safety-oriented control signals (S) intended for the industrial-technical process (1) - a signature (I) uniquely identifying a computing path of the Cloud (7),
- **that** the control device (2) transfers the safety-oriented input signals (E) a further time to the Cloud (7) using the fail-safe protocol via the link (8) to the computer network (9),
- **that** the control device (2) accepts further safety-oriented control signals (S') intended for the industrial-technical process (1) from the Cloud (7) over the link (8) to the computer network (9), using the fail-safe protocol, and also in addition to the further safety-oriented control signals (S') intended for the industrial-technical process (1) - especially together with the further safety-oriented control signals (S') intended for the industrial-technical process (1) - accepts a further signature (I') uniquely identifying a computing path of the Cloud (7)
- **that** the additional information (S"; S', I, I'; P) comprises further safety-oriented control signals (S') accepted from the Cloud (7) and the signatures (I, I') of the computing path and
- **that** the checking for correctness of the safety-oriented control signals (S) transferred from the Cloud (7) to the control device (2) comprises a comparison between the safety-oriented control signals (S, S') accepted from the Cloud (7) and a comparison between the signatures (I, I') accepted from the Cloud (7).

4. Operating method according to claim 1,
**characterised in**
- **that** the control device (2) transfers the safety-oriented input signals (E) a further time to the Cloud (7) using the fail-safe protocol via the link (8) to the computer network (9),
- **that** the control device (2) accepts, using the fail-safe protocol, over the link (8) to the computer network (9), in addition to the safety oriented control signals (S) intended for the industrial-technical process (1) - especially together with the safety-oriented control signals (S) intended for the industrial-technical process (1) - test information (P),
- **that** the additional information (S"; S', I, I'; P) comprises the test information (P) and
- **that** the checking for correctness of the safety-oriented control signals (S) transferred to the control device (2) comprises a check on the test information (P) for a match with required test information (P*).

5. Control program for a control device (2) for an industrial-technical process (1), wherein the control program comprises machine code (6) that is able to be directly processed by a processor device (3) of the control device (2) and the processing of which by the processor device (3) causes the control device (2) to execute an operating method according to one of the above claims.

6. Control device for an industrial-technical process (1), wherein the control device comprises a processor device (3), wherein the control device is programmed with a control program (5) according to claim 5, so that during operation, as a result of the processing of the machine code (6) of the control program (5) by the processor device (3), an operating method according to one of claims 1 to 4 is executed.

## Revendications

1. Procédé pour faire fonctionner un dispositif (2) de commande d'une opération (1) technique industrielle, dans lequel le dispositif (2) de commande respectivement cycliquement
- reçoit, d'une manière sécurisée vis-à-vis d'une erreur, des signaux ( E ) d'entrée relatifs à la sécurité de l'opération ( 1 ) technique industrielle,
- transmet à une interconnexion ( 7 ) d'ordinateur, par une liaison ( 8 ) à un réseau ( 9 ) d'ordinateur, les signaux ( E ) d'entrée relatifs à la sécurité en utilisant un protocole sécurisé vis-à-vis d'une erreur,
- reçoit, par la liaison ( 8 ) au réseau ( 9 ) d'ordinateur de l'interconnexion ( 7 ) d'ordinateur, des signaux ( S ) de commande relatifs à la sécurité destinés à l'opération ( 1 ) technique industrielle en utilisant le protocole sécurisé vis-à-vis d'une erreur,
- décide, d'une manière sécurisée vis-à-vis d'une erreur, au moyen d'informations ( S"; S', I, I'; P ) supplémentaires, si sont reconnus comme corrects les signaux ( S ) de commande relatifs à la sécurité déterminés par l'interconnexion ( 7 ) d'ordinateur et destinés à l'opération ( 1 ) technique industrielle, et
- suivant le résultat de la décision, commande, d'une manière sécurisée vis-à-vis d'une erreur, l'opération ( 1 ) technique industrielle conformément aux signaux ( S ) de commande relatifs à la sécurité ou fait passer, d'une manière sécurisée vis-à-vis d'une erreur, l'opération ( 1 ) technique industrielle à un état sécurisé.

2. Procédé suivant la revendication 1,
**caractérisé**
- **en ce que** le dispositif ( 2 ) de commande soi-même détermine, en utilisant les signaux ( E ) d'entrée relatifs à la sécurité, reçus d'une manière sécurisée vis-à-vis d'une erreur de l'opération ( 1 ) technique industrielle, d'autres signaux ( S" ) de commande relatifs à la sécurité et destinés à l'opération ( 1 ) technique industrielle,
- **en ce que** les informations ( S"; S', I, I'; P ) supplémentaires comprennent les autres signaux ( S" ) de commande relatifs à la sécurité déterminés par le dispositif ( 2 ) de commande soi-même et
- **en ce que** le contrôle de la correction des signaux ( S ) de commande relatifs à la sécurité et transmis de l'interconnexion ( 7 ) d'ordinateur au dispositif ( 2 ) de commande comprend une comparaison des signaux ( S ) de commande relatifs à la sécurité et transmis au dispositif ( 2 ) de commande à d'autres signaux ( S" ) de commande relatifs à la sécurité déterminés par le dispositif ( 2 ) de commande soi-même.

3. Procédé suivant la revendication 1,
**caractérisé**
- **en ce que** le dispositif ( 2 ) de commande reçoit, par la liaison ( 8 ) au réseau ( 9 ) d'ordinateur de l'interconnexion ( 7 ) d'ordinateur, en utilisant le protocole sécurisé vis-à-vis d'une erreur, en plus des signaux ( S ) de commande relatifs à la sécurité destinés à l'opération ( 1 ) technique industrielle - notamment ensemble avec les signaux ( S ) de commande relatifs à la sécurité destinés à l'opération ( 1 ) technique industrielle - une signature ( I ) identifiant sans ambiguïté un chemin de calcul de l'interconnexion ( 7 ) d'ordinateur,
- **en ce que** le dispositif ( 2 ) de commande transmet, une fois de plus à l'interconnexion ( 7 ) d'ordinateur par la liaison ( 8 ) au réseau ( 9 ) d'ordinateur, les signaux ( E ) d'entrée relatifs à la sécurité en utilisant le protocole sécurisé vis-à-vis d'une erreur,
- **en ce que** le dispositif ( 2 ) de commande reçoit, par la liaison ( 8 ) au réseau ( 9 ) d'ordinateur de l'interconnexion ( 7 ) d'ordinateur, en utilisant le protocole sécurisé vis-à-vis d'une erreur, d'autres signaux ( S' ) de commande relatifs à la sécurité destinés à l'opération ( 1 ) technique industrielle, ainsi qu'en plus des autres signaux ( S' ) de commande relatifs à la sécurité destinés à l'opération ( 1 ) technique industrielle - notamment ensemble avec les autres signaux ( S' ) de commande relatifs à la sécurité destinés à l'opération ( 1 ) technique industrielle - une autre signature ( I' ) identifiant sans ambiguïté un autre chemin de calcul de l'interconnexion ( 7 ) d'ordinateur,
- **en ce que** les informations ( S"; S', I, I'; P ) supplémentaires comprennent les autres signaux ( S' ) de commande relatifs à la sécurité et reçus de l'interconnexion ( 7 ) d'ordinateur et les signatures ( I, I' ) des chemins de calcul et
- **en ce que** le contrôle de la correction des signaux ( S ) de commande relatifs à la sécurité transmis de l'interconnexion ( 7 ) d'ordinateur au dispositif de commande comprend une comparaison entre eux des signaux ( S, S' ) de commande relatifs à la sécurité reçus de l'interconnexion ( 7 ) d'ordinateur et une comparaison des signatures ( I, I' ) entre elles reçues de l'interconnexion ( 7 ) d'ordinateur.

4. Procédé suivant la revendication 1,
**caractérisé**
- **en ce que** le dispositif ( 2 ) de commande transmet, une fois de plus à l'interconnexion ( 7 ) d'ordinateur par la liaison ( 8 ) au réseau ( 8 ) d'ordinateur, les signaux ( E ) d'entrée relatifs à la sécurité en utilisant le protocole sécurisé vis-à-vis d'une erreur,
- **en ce que** le dispositif ( 2 ) de commande reçoit, par la liaison ( 8 ) au réseau ( 9 ) d'ordinateur en utilisant le protocole sécurisé vis-à-vis d'une erreur, en plus des signaux ( S ) de commande relatifs à la sécurité destinés à l'opération ( 1 ) technique industrielle - notamment ensemble avec les signaux ( S ) de commande relatifs à la sécurité destinés à l'opération ( 1 ) technique industrielle - des informations ( P ) de contrôle,
- **en ce que** les informations ( S"; S', I, I'; P ) supplémentaires comprennent les informations ( P ) de contrôle et
- **en ce que** le contrôle de la correction des signaux ( S ) de commande relatifs à la sécurité transmis au dispositif ( 2 ) de commande comprend un contrôle de la coïncidence des informations ( P ) de contrôle avec des informations ( P* ) de contrôle de consigne.

5. Programme de commande pour un dispositif ( 2 ) de commande d'une opération ( 1 ) technique industrielle, dans lequel le programme de commande comprend un code ( 6 ) machine, qui peut être effectué directement par un dispositif ( 3 ) de processeur du dispositif ( 2 ) de commande et dont le déroulement effectué par le dispositif de processeur fait que le dispositif ( 2 ) de commande exécute un procédé de fonctionnement suivant l'une des revendications précédentes.

6. Dispositif de commande d'une opération ( 1 ) technique industrielle, le dispositif de commande comprenant un dispositif ( 3 ) de processeur, le dispositif de commande étant programmé par un programme ( 5 ) de commande suivant la revendication 5, de manière à effectuer en fonctionnement, en raison du fait que le dispositif ( 3 ) de processeur fait se dérouler le code ( 6 ) machine du programme ( 5 ) de commande, un procédé de fonctionnement suivant l'une des revendications 1 à 4.
